# EUROPEAN PATENT APPLICATION

(11) **EP 4 390 486 A1**
(43) Date of publication of application: **26.06.2024**
(21) Application number: 23215849.3
(22) Date of filing: 12.12.2023
(51) Int. Cl.: G02B 6/38

(54) **FIBER OPTIC CONNECTORS WITH SEALING MEMBERS AND METHODS OF FABRICATING THE SAME**

(30) Priority: 22.12.2022 US 202263434521 P
(71) Applicant: Corning Research & Development Corporation, Corning, New York 14831 (US)
(72) Inventor: Rosson, Joel Christopher, Hickory, 28601 (US)
(74) Representative: Sturm, Christoph

(57) **Abstract**

In one embodiment, a fiber optic connector assembly includes a housing including a rear end and a front end with a longitudinal passageway extending from the rear end to the front end, wherein the rear end extends from a wall, and a connector sleeve including a first end, a reduced diameter portion at the first end, a rear wall, and a second end extending from the rear wall. The first end of the connector sleeve is disposed over the rear end of the housing. The reduced diameter portion of the connector sleeve and the wall of the housing define a primary groove. The fiber optic connector assembly further includes a boot having an insertion-end, wherein the boot is disposed over a portion of the second end of the connector sleeve such that the insertion-end of the boot and the rear wall of the connector sleeve define a secondary groove.

## Description

### PRIORITY APPLICATIONS

This application claims the benefit of priority of U.S. Provisional Application Serial No. 63/434521 filed on December 22, 2022, the content of which is relied upon and incorporated herein by reference in its entirety.

### FIELD

The disclosure is directed to fiber optic connector assemblies and, more particularly, to fiber optic connector assemblies for mating with ports of a multi-port terminal.

### BACKGROUND

Optical fiber is increasingly being used for a variety of applications, including but not limited to broadband voice, video, and data transmission. As bandwidth demands increase optical fiber is migrating deeper into communication networks such as in fiber to the premises applications such as FTTx, 5G, and the like. As optical fiber extends deeper into communication networks there exists a need for building more complex and flexible fiber optic networks in a quick and easy manner.

Fiber optic connectors are often inserted into a receiving port, such as a port of a multi-port terminal. Preferably there should be a sealing element between the fiber optic connector and an inner wall of the port to prevent liquid, dust, and/or debris from the environment from entering the port and/or the fiber optic connector. However, molded plastic components of the fiber optic connector may require a parting line, which provides a leak risk. Further, insufficient sealing of the fiber optic connector and/or the port may cause damage to the fiber optic connector and/or the terminal.

Consequently, there exists an unresolved need for fiber optic connectors and ports having enhanced sealing capabilities.

### SUMMARY

Various embodiments of fiber optic connector assemblies are disclosed. The fiber optic connector assemblies of the present disclosure provide a connector sleeve as a component that is separate from a housing, which eliminates the need to have a molded parting line in a groove that receives a sealing member, which eliminates a leak risk at the groove. Embodiments also employ a secondary sealing element that is tapered and provides lead-in compressing during insertion of the fiber optic connector assembly into a port or a dust cap, which is not possible with a simple O-ring design. The two-part design of the connector housing and the connector sleeve also eliminate the parting line on the groove for the secondary seal, which further minimizes leak risk.

In one embodiment, a fiber optic connector assembly includes a housing including a rear end and a front end with a longitudinal passageway extending from the rear end to the front end, wherein the rear end extends from a wall, and a connector sleeve including a first end, a reduced diameter portion at the first end, a rear wall, and a second end extending from the rear wall. The first end of the connector sleeve is disposed over the rear end of the housing. The reduced diameter portion of the connector sleeve and the wall of the housing define a primary groove. The fiber optic connector assembly further includes a boot having an insertion end, wherein the boot is disposed over a portion of the second end of the connector sleeve such that the insertion end of the boot and the rear wall of the connector sleeve define a secondary groove.

In another embodiment, a fiber optic connector assembly includes a housing including a rear end and a front end with a longitudinal passageway extending from the rear end to the front end, wherein the rear end extends from a wall, and a connector sleeve including a first end, a reduced diameter portion at the first end, a rear wall, and a second end extending from the rear wall. The first end of the connector sleeve is disposed over the rear end of the housing. The reduced diameter portion of the connector sleeve and the wall of the housing define a primary groove. The second end of the connector sleeve has an engagement groove. The fiber optic connector assembly also includes a boot having an insertion end and a barb at an interior surface of the insertion end. The boot is disposed over a portion of the second end of the connector sleeve such that the insertion end of the boot and the rear wall of the connector sleeve define a secondary groove and the barb is disposed within the engagement groove.

In yet another embodiment, a method of assembling a fiber optic connector assembly includes removing a portion of a jacket of an optical cable to expose one or more strength members and an optical fiber, cutting the one or more strength members, inserting the optical cable into a cable adapter such that the one or more strength members are disposed within a strength member enclosure of the cable adapter, and the optical fiber extends through an opening of a front end of the cable adapter, and inserting the cable adapter and the optical fiber into a longitudinal passageway of a housing such that the cable adapter is disposed within a rear end of the housing and an end of the optical fiber is positioned within a ferrule assembly disposed within a front end of the housing. The housing includes a housing adhesive aperture at the rear end. The cable adapter further includes an adapter adhesive aperture. The housing adhesive aperture is aligned with the adapter adhesive aperture. The method further includes disposing an adhesive within the housing adhesive aperture, the adapter adhesive aperture, and the strength member enclosure, and positioning a first end of a connector sleeve over the rear end of the housing. The connector sleeve has a reduced diameter portion at the first end, a rear wall, and a second end extending from the rear wall. The reduced diameter portion of the connector sleeve and a wall of the housing define a primary groove. The method further includes applying a curing energy to the connector sleeve to cure the adhesive, and securing an insertion end of a boot to a portion of the second end of the connector sleeve, wherein the optical cable is disposed through the boot, and the rear wall of the connector sleeve defines a secondary groove.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure and are incorporated into and constitute a part of this specification. The drawings illustrate various embodiments and together with the description serve to explain the principles and operation.

### BRIEF DESCRIPTION OF THE FIGURES

FIG. 1 is a perspective assembled view of an example fiber optic connector assembly according to one or more embodiments described and illustrated herein;
FIG. 2 is a perspective exploded view of the example fiber optic connector assembly of FIG. 1 according to one or more embodiments described and illustrated herein;
FIG. 3 is a cross-sectional view of the example fiber optic connector assembly of FIGS. 1 and 2 according to one or more embodiments described and illustrated herein;
FIG. 4 is a perspective view of an example cable adapter according to one or more embodiments described and illustrated herein;
FIG. 5 is a perspective cutaway view of the example cable adapter of FIG. 4 according to one or more embodiments described and illustrated herein;
FIG. 6 is a perspective cutaway view of the example cable adapter of FIGS. 4 and 5 with an example fiber optic cable inserted therein according to one or more embodiments described and illustrated herein;
FIG. 7 is a perspective cutaway view of an example housing according to one or more embodiments described and illustrated herein;
FIG. 8 is a perspective cutaway view of the example housing, cable adapter and fiber optic cable of FIGS. 6 and 7 according to one or more embodiments described and illustrated herein;
FIG. 9 is a cross-sectional assembled view of an example fiber optic cable, cable adapter, and housing according to one or more embodiments described and illustrated herein;
FIG. 10 is a perspective view of a heat shrink member applied to a connector sleeve according to one or more embodiments described and illustrated herein;
FIG. 11 is a perspective view of the heat shrink member and the connector sleeve and a secondary sealing member according to one or more embodiments described and illustrated herein;
FIG. 12 is a close-up cross-sectional view of the rear portion of the example fiber optic connector assembly according to one or more embodiments described and illustrated herein;
FIG. 13 is a perspective view of an example multiport terminal according to one or more embodiments described and illustrated herein;
FIG. 14 is a flowchart illustrating an example method of fabricating a fiber optic connector assembly according to one or more embodiments described and illustrated herein.

### DETAILED DESCRIPTION

References will now be made in detail to the embodiments of the disclosure, examples of which are illustrated in the accompanying drawings. Whenever possible, like reference numbers will be used to refer to like components or parts.

The concepts disclosed are related to fiber optic connector assemblies and methods of their fabrication. The fiber optic connector assemblies of the present disclosure provide a connector sleeve as a component that is separate from a housing, which eliminates the need to have a molded parting line in a groove that receives a sealing member, which eliminates a leak risk at the groove. Embodiments also employ a secondary sealing element that is tapered and provides lead-in compressing during insertion of the fiber optic connector assembly into a port or a dust cap, which is not possible with a simple O-ring design. The two-part design of the connector housing and the connector sleeve also eliminate the parting line on the groove for the secondary seal, which further minimizes leak risk.

Various embodiments of fiber optic connector assemblies and methods of their fabrication are described in detail below.

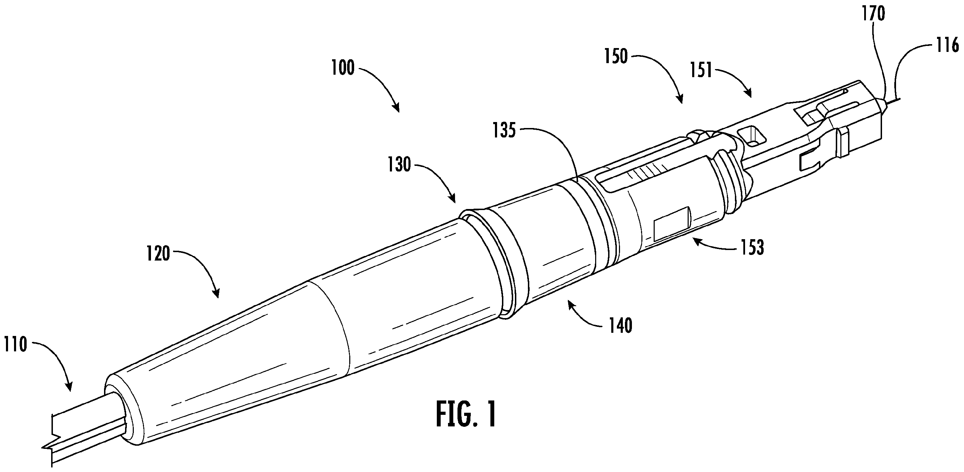

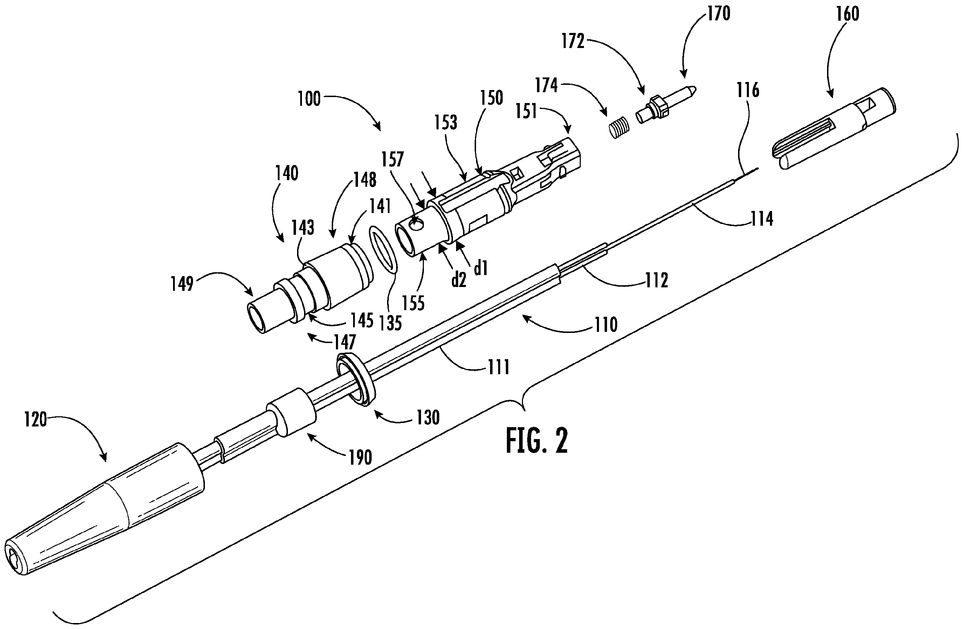

Referring now to FIGS. 1 and 2, a non-limiting, example fiber optic connector assembly 100 is illustrated. FIG. 1 is a perspective assembled view and FIG. 2 is a perspective exploded view of the fiber optic connector assembly 100. In the illustrated example, the fiber optic connector assembly 100 is configured as a Pushlok^{™} connector operable to be mated with ports of an Evolv^{™} terminal sold by Corning Optical Communications of Charlotte, NC. However, it should be understood that the embodiments described herein are not limited to the type of optical connector illustrated by FIG. 1.

The example fiber optic connector assembly 100 further includes a housing 150, a cable adapter 160, a connector sleeve 140 coupled to a rear end of the housing 150, and a boot 120 coupled to a second end 149 of the connector sleeve 140. As described in more detail below, a secondary sealing member 130 is positioned between the boot 120 and the connector sleeve 140, and a primary sealing member 135 is positioned between the connector sleeve 140 and the housing 150.

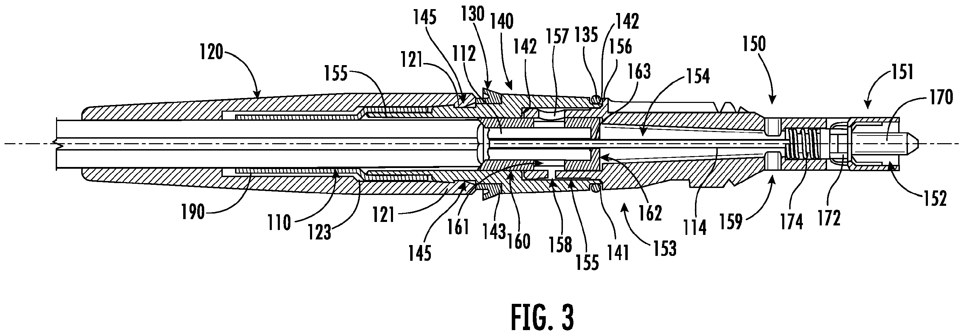

FIG. 3 is a cross-sectional view of the example fiber optic connector assembly 100 depicted by FIGS. 1 and 2. Referring to FIGS. 1-3, the housing 150 generally includes an outer surface that extends around a perimeter of the housing 150, and the outer surface may include one or more cross-sectional shapes. For example, in the embodiment depicted in FIGS. 1-3, the front end 151 of the housing 150 includes a rectangular cross-section including planar sides, while the rear end 155 of the housing 150 includes a curved outer surface. The rear end 155 may be cylindrical, for example. In the illustrated embodiment, the rear end 155 and the front end 151 are separated by a transition region 153 also having a curved surface. The transition region 153 may also be cylindrical, for example. A diameter **di** of the transition region 153 is greater than a diameter **d₂** of the rear end 155 (FIG. 2) thereby providing a rear wall 156 (FIG. 3) from which the rear end 155 extends.

The outer surface may also include one or more keying features and/or one or more locking features for engaging with components of a port of a terminal, as well as external threads for engagement with components, such as adapters, dust caps, and the like.

The housing 150 includes a longitudinal passageway 154 that extends from an opening 152 at the front end 151 to an opening at the rear end 155. The longitudinal passageway 154 is configured to receive and maintain a ferrule holder 172 that further maintains a cylindrical ferrule 170 in which a bare optical fiber 116 is disposed. A bias member 174 configured as a ferrule spring is also disposed within the longitudinal passageway 154 to bias the ferrule holder 172 in a longitudinal direction toward the opening 152.

The rear end 155 of the housing 150 further includes an adhesive aperture for receiving an adhesive (e.g., epoxy) to secure components maintained within the housing 150, as described in more detail below.

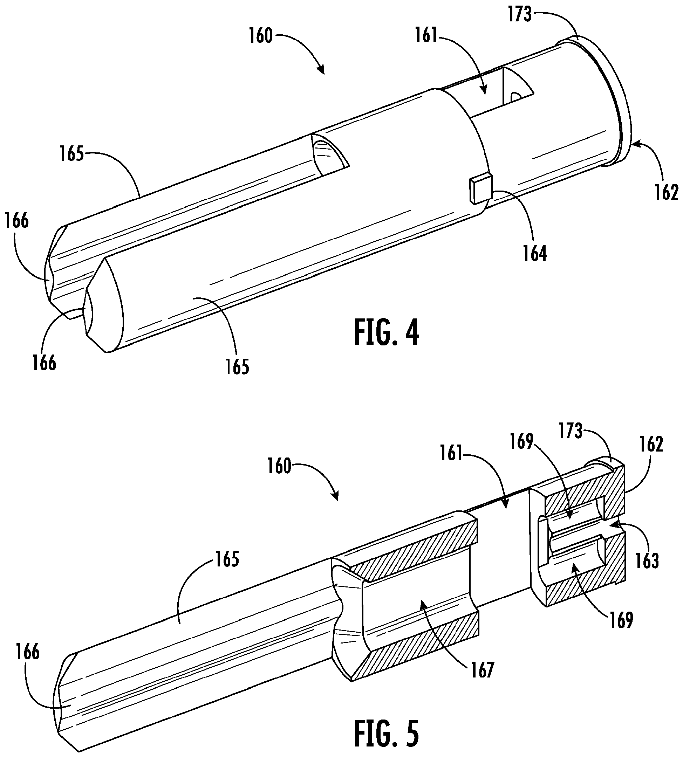

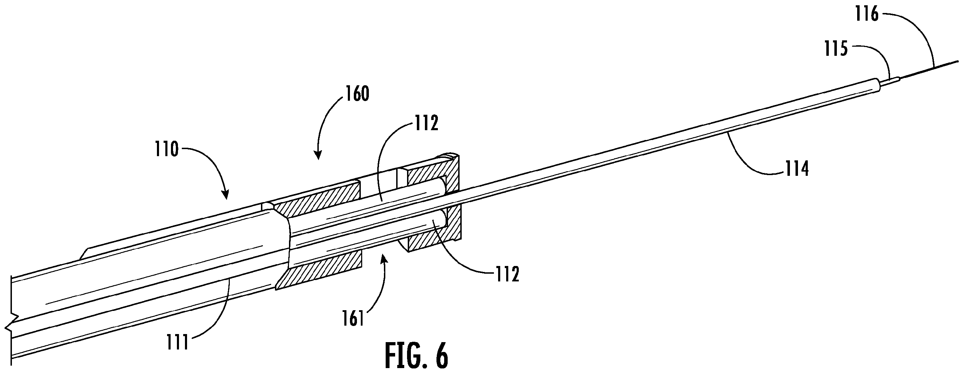

The cable adapter 160 is disposed within the longitudinal passageway 154 at the rear end 155 such that a portion of the cable adapter 160 extends out of the rear end 155 of the housing 150. The cable adapter 160 is provided to accommodate different optical cable types and shapes. FIG. 4 is a perspective view of an example cable adapter 160, FIG. 5 is an example perspective, partial cutaway view of the example cable adapter 160 of FIG. 4, and FIG. 6 is the perspective, cutaway view of the cable adapter 160 of FIG. 5 with an optical cable 110 positioned therein. The cable adapter 160 may take on different configurations depending on the type of optical cable. There may be a unique cable adapter for each optical cable type, for example.

The example cable adapter 160 of FIGS. 4 and 5 has a front face 162 and two extending wings 165 having an inner protrusion 166 for capturing and centering non-round cable jackets. The inner protrusions 166 force the jacket 111 of the optical cable 110 into a proper orientation. More particularly, the inner protrusions force the non-round optical cable 110 into the proper orientation by urging the optical cable 110 such that the inner protrusions are within a reduced-width region of the optical cable between the two strength member 112.

Referring to FIGS. 4 and 5, the cable adapter 160 also includes an adapter adhesive aperture 161 for receiving an adhesive (e.g., epoxy). An alignment tab 164 may be provided on the outer surface of the cable adapter 160 that orients the cable adapter 160 in a proper orientation with respect to the housing 150 such that the adapter adhesive aperture 161 is radially aligned with the adhesive aperture 157 of the housing 150.

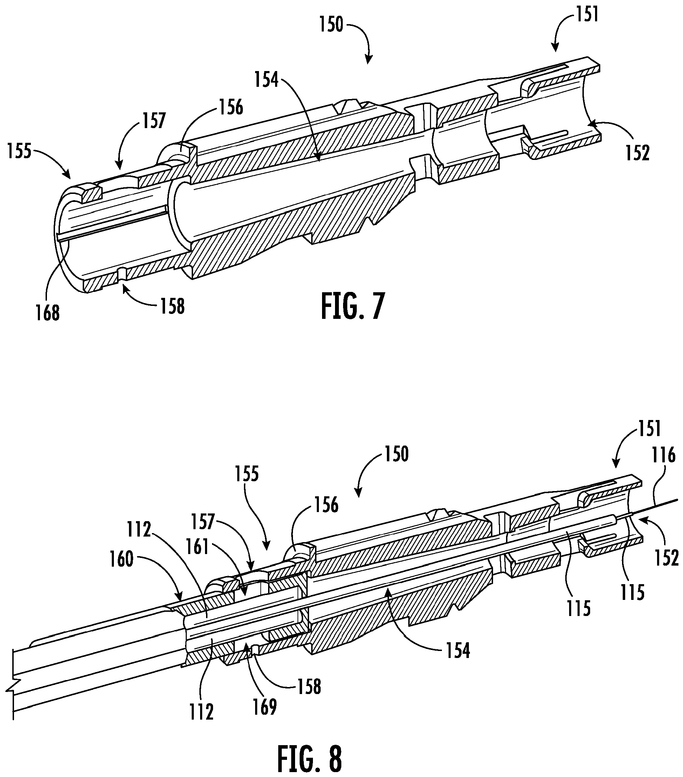

Referring now to FIG. 7, which is a cutaway view of the housing 150, an alignment feature 168 in the form of a longitudinal groove on an interior surface defining the longitudinal passageway 154 that is configured to receive the alignment tab 164. Thus, the alignment tab 164 and the alignment feature 168 cooperate to align the adhesive aperture 157 with the adapter adhesive aperture 161 so that adhesive applied to the adhesive aperture 157 also flows through the adapter adhesive aperture 161 and into the passageway of the cable adapter 160. FIG. 8 is a cutaway view showing the cable adapter 160 inserted into the housing 150 such that the adhesive aperture 157 is aligned with the adapter adhesive aperture 161.

As shown in FIGS. 7 and 8, the rear end 155 of the housing 150 also includes a secondary aperture 158 that is provided so that adhesive may flow into the adhesive aperture 157, through the longitudinal passageway 154, and out of the secondary aperture 158. Adhesive flowing through the secondary aperture 158 allows additional adhesive to secure the connector sleeve 140 to the rear end 155 of the housing 150, as described in more detail below.

As shown in FIG. 6, a portion of the jacket 111 is stripped away to expose the two strength members 112, which provide strength and rigidity to the optical cable 110. The strength members 112 may be made of any material, such as aramid yard, glass-reinforced plastic, or metal material, as non-limiting examples. Referring to both FIGS. 5 and 6, an interior passageway of the cable adapter 160 includes a jacket region 167 for securely maintaining the jacket 111, two strength member regions 169 defining a strength member enclosure for receiving and maintaining the two strength members 112 and a narrow optical fiber region 163 for receiving the inner jacket 114 of the optical fiber of the optical cable, which is further stripped to reveal a coating 115 and then the exposed fiber 116. The two strength member regions 169 have a larger volume than the optical fiber region 163 to accommodate the larger strength member 112. The optical fiber having the inner jacket 114 passes through a fiber opening in the front face 162.

Referring once again to FIG. 2, the connector sleeve 140 is a component that is wholly separate from the housing 150 and the cable adapter 160. As described in more detail below, the connector sleeve 140 is configured to provide regions for accepting sealing members for environmental protection when the fiber optic connector assembly 100 is mated with a port of a terminal. The connector sleeve 140 has an outer surface that provides for several cylindrically shaped regions. However, in some embodiments the connector sleeve 140 may have a shape that is elliptical in cross section, and/or have one or more portions having straight, non-curved surfaces.

The connector sleeve 140 may be fabricated from a metal material to enhance the curing process by application of RF energy. As shown in FIG. 2, the connector sleeve 140 has a first end 148 and a second end 149 with a transition region 147 therebetween. The diameter of the transition region 147 is less than the diameter of the first end 148 such that the first end 148 has a rear wall 143. The transition region further comprises a circumferential engagement groove 145. The first end 148 has a reduced diameter portion 141 at the very end.

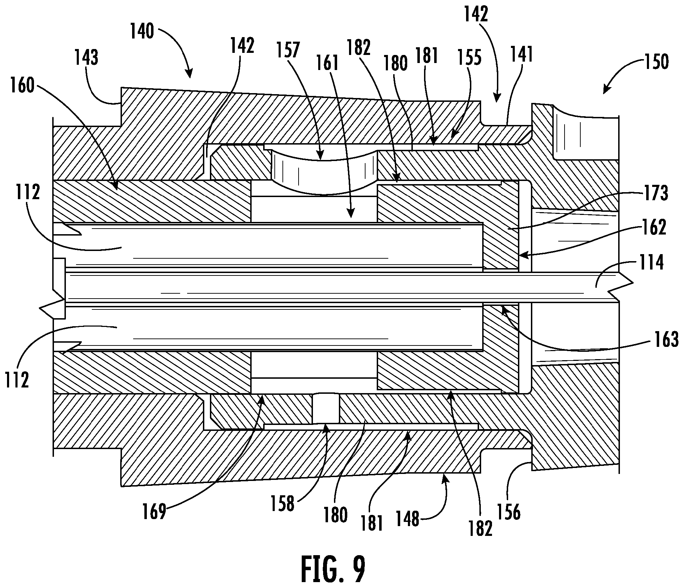

After adhesive is applied to the adhesive aperture 157 of the housing 150, the first end 148 of the connector sleeve 140 is disposed over the rear end 155 of the housing 150, as shown in FIGS. 1 and 3. FIG. 9 illustrates a cross-sectional view of the cable adapter 160 inserted into the housing 150, and the connector sleeve 140 disposed on the rear end 155 of the housing 150. Referring to FIGS. 1, 3 and 9, the end face of the reduced diameter portion 141 abuts, or is in close proximity to, the rear wall 156 of the housing 150, which defines a primary groove 142 for receiving a primary sealing member 135, which may be configured as an O-ring.

The floor of the primary groove has no parting line. The connector sleeve 140 is fabricated without a parting line on the floor of the primary groove 142 due to the stepped feature of the connector sleeve 140.

Referring specifically to FIG. 9, the rear end 155 of the housing has an annular groove 180 with a reduced diameter that provides a first adhesive annulus 181 between an outer surface of the rear end 155 of the housing 150 and an inner surface of the connector sleeve 140. The cable adapter 160 further includes an annular ring 173 at the front face 162 having an increased diameter as compared to areas of the cable adapter 160 forward of the adapter adhesive aperture 161 (i.e., toward the front face 162). The annular ring 173 provides a second adhesive annulus 182 between an outer surface of the cable adapter and an inner surface of the rear end 155 of the housing 150. When adhesive is provided to the adhesive aperture 157 and the connector sleeve 140 is disposed over the rear end 155 of the housing 150, the adhesive flows into the cable adapter 160 through the adapter adhesive aperture 161, and flows into the first adhesive annulus 181 and the second adhesive annulus 182 by capillary force. The adhesive further flows around the strength members 112 and the optical fiber 114 within the cable adapter. The adhesive also flows through the secondary aperture 158 in the rear end 155 of the housing and into the first adhesive annulus 181 proximate the secondary aperture 158.

After the adhesive is applied and the connector sleeve 140 is disposed on the housing 150, the adhesive may be cured by the application of RF energy in an RF curing process. The RF energy is converted into heat by the metal connector sleeve, which accelerates the heat application and minimizes cure time. In this manner, the optical fiber 114 and the strength members 112 are secured to the cable adapter 160, the cable adapter 160 is secured to the housing 150, and the housing 150 is secured to the connector sleeve 140. It should be understood that the connector sleeve 140 may be fabricated from materials other than metal, such as molded plastic.

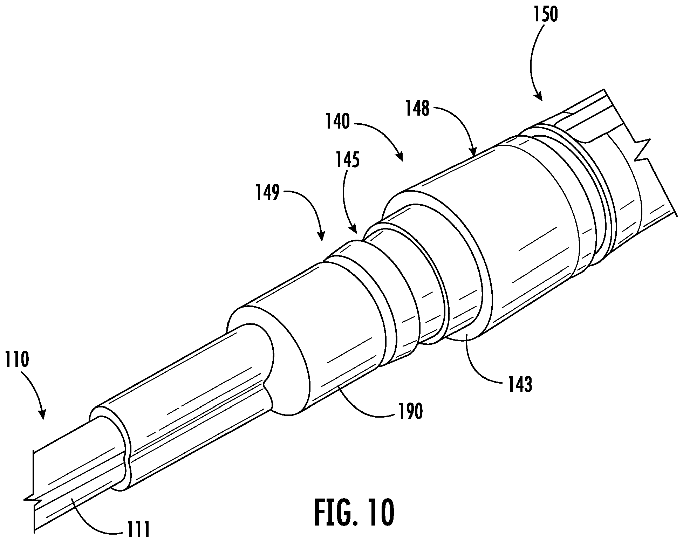

As shown in FIGS. 3 and 10, a heat shrink 190 is applied to the second end 149 of the connector sleeve 140 and the jacket 111 of the optical cable 110. The heat shrink member 190 provides environmental sealing for the second end 149 of the connector sleeve 140.

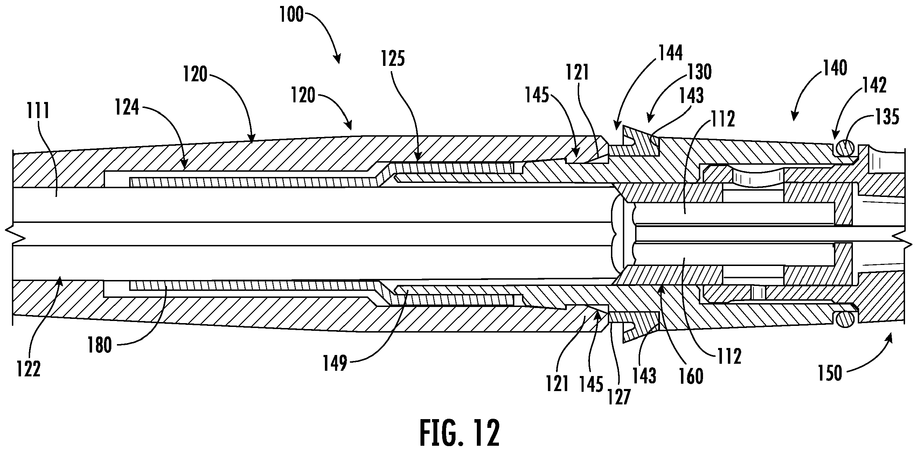

FIG. 12 is a cross-sectional view of the boot 120 secured over a heat shrink member 190 and a connector sleeve 140. The boot 120 includes a passageway comprising a jacket portion 122, a heat shrink portion 124 that is larger than the jacket portion 122 to accommodate the heat shrink member 190, and a connector sleeve portion 125 that is larger than the jacket portion 122 to accommodate the connector sleeve 140. The boot 120 further includes an interior barb 121 at the end of the connector sleeve portion 125. As shown by FIG. 12, the boot 120 is inserted over the second end 149 and partially over the transition region 147 of the connector sleeve such that the barb 121 is disposed within the engagement groove 145. The placement of the barb 121 in the engagement groove 145 secures the boot 120 to the connector sleeve 140.

An insertion end 127 of the boot 120 abuts a wall of the engagement groove 145, leaving a gap between the insertion end 127 and the rear wall 143 of the connector sleeve 140 that defines a secondary groove 144 for receiving the secondary sealing member 130. The example secondary sealing member 130 has a straight portion 132 and a tapered portion 131 extending from an end of the straight portion 132. The tapered portion 131 is configured to be compressed against an inner surface of a port of a terminal.

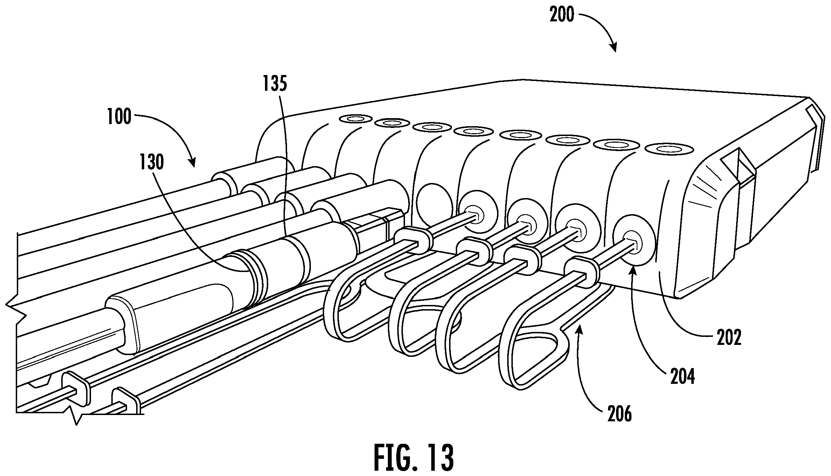

Referring now to FIG. 13, a non-limiting, fiber optic multiport assembly is illustrated. The fiber optic multiport assembly 200 includes a multiport terminal 202, a plurality of fiber optic connector assemblies 100, and a plurality of dustplug assemblies 206. The multiport terminal 202 is configured to enable fiber-to-the-infrastructure (FTTx) for optical communication networks. As a non-limiting example, the multiport terminal 102 may be an Evolv^{™} terminal manufactured and sold by Corning Optical Communications of Charlotte, NC.

The multiport terminal 102 has a multiport body 204 that includes a plurality of ports 204 operable to receive a plurality of fiber optic connector assemblies 100, such as fiber optic connector of drop cables, for example.

In some instances, not all of the ports 204 of the multiport terminal 202 may be in use. For example, there may be more ports 204 than subscribers. To protect the internal components of the multiport terminal 202, dustplug assemblies 206 are inserted in unused ports 204. These dustplug assemblies 206 seal the unused ports 204 and protect the enclosure of the multiport terminal 202 from the environment.

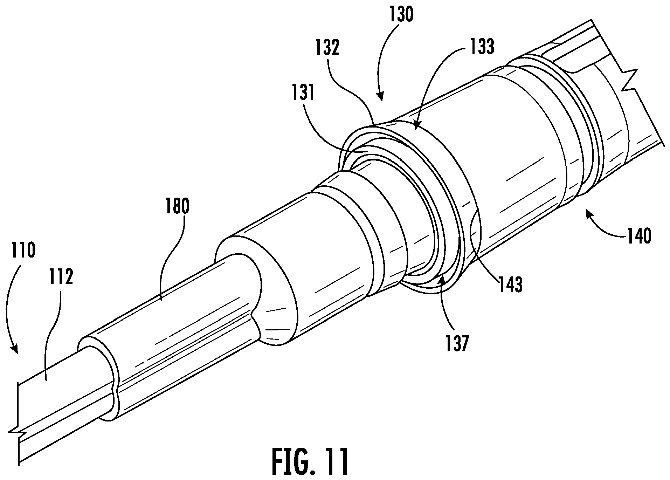

When the fiber optic cable assembly 100 is inserted into port 204, the tapered portion 131 of the secondary sealing member 130 provides a lead-in surface that compresses against an inner surface of the port 204 (or a dust cap placed on the connector). As shown in FIG. 11, a gap 137 between tapered portion 131 and the straight portion 132 enables further compression of the tapered portion 131 toward the straight portion 132.

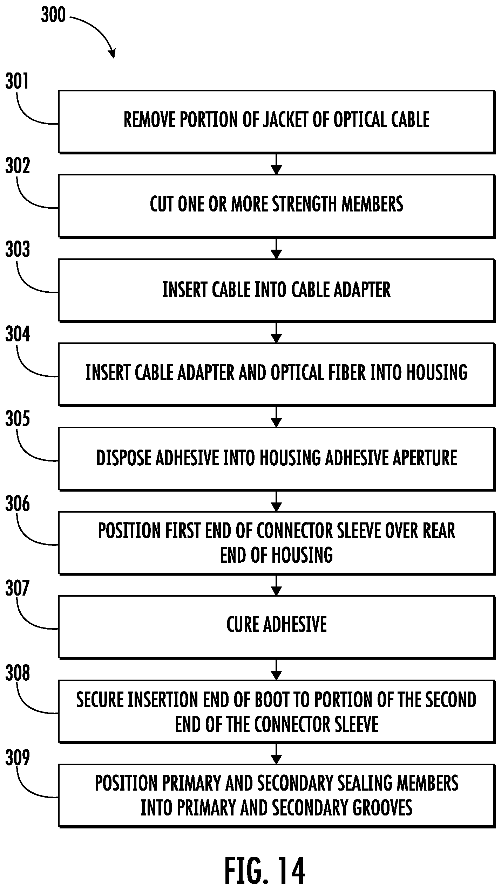

Referring now to FIG. 14, a flowchart 300 illustrating a method of fabricating a fiber optic connector assembly is provided. At block 301, a portion of the outer jacket of an optical cable is stripped away. Any method of stripping the outer jacket may be used. Stripping the outer jacket reveals one or more strength members and the optical fiber, which may be encased by one or more jacket and/or coating layers. The one or more jacket and/or coating layers may also be stripped at an end of the optical fiber.

At block 302, the one or more strength members are trimmed such that the optical fiber extends beyond the one or more strength members. At block 303, the optical cable is inserted into a cable adapter such that the one or more strength members are disposed within a strength member enclosure of the cable adapter, and the optical fiber extends through an opening of a front end of the cable adapter.

Next, the cable adapter and the optical fiber are inserted into a longitudinal passageway of a housing at block 304 such that the cable adapter is disposed within a rear end of the housing and an end of the optical fiber is positioned within a ferrule assembly disposed within a front end of the housing. As described above, the housing comprises a housing adhesive aperture at the rear end, and the cable adapter further comprises an adapter adhesive aperture that is aligned with the adapter adhesive aperture.

To secure the one or more strength members to the cable adapter and to secure the cable adapter to the housing, at block 305 an adhesive is disposed within the housing adhesive aperture, the adapter adhesive aperture, and the strength member enclosure.

At block 306, a first end of a connector sleeve is positioned over the rear end of the housing. As described above, the connector sleeve comprises a reduced diameter portion at the first end, a rear wall, and a second end extending from the rear wall. The reduced diameter portion of the connector sleeve and a wall of the housing define a primary groove.

At block 307, a curing energy (e.g., RF energy, heat, ultra-violet light, and/or the like) is applied to the connector sleeve to cure the adhesive. It is noted that in some embodiments no curing energy is applied and the adhesive is allowed to cure at room temperature.

Next, an insertion end of a boot is secured to a portion of the second end of the connector sleeve at block 308 such that the optical cable is disposed through the boot, and the rear wall of the connector sleeve define a secondary groove. At block 309, primary and secondary sealing members are positioned in the primary and secondary grooves, respectively.

It is noted that recitations herein of a component of the embodiments being "configured" in a particular way, "configured" to embody a particular property, or function in a particular manner, are structural recitations as opposed to recitations of intended use. More specifically, the references herein to the manner in which a component is "configured" denotes an existing physical condition of the component and, as such, is to be taken as a definite recitation of the structural characteristics of the component.

It is noted that one or more of the following claims utilize the term "wherein" as a transitional phrase. For the purposes of defining the embodiments of the present disclosure, it is noted that this term is introduced in the claims as an open-ended transitional phrase that is used to introduce a recitation of a series of characteristics of the structure and should be interpreted in like manner as the more commonly used open-ended preamble term "comprising."

Although the disclosure has been illustrated and described herein with reference to explanatory embodiments and specific examples thereof, it will be readily apparent to those of ordinary skill in the art that other embodiments and examples can perform similar functions and/or achieve like results. For instance, the connection port insert may be configured as individual sleeves that are inserted into a passageway of a device, thereby allowing the selection of different configurations of connector ports for a device to tailor the device to the desired external connector. All such equivalent embodiments and examples are within the spirit and scope of the disclosure and are intended to be covered by the appended claims. It will also be apparent to those skilled in the art that various modifications and variations can be made to the concepts disclosed without departing from the spirit and scope of the same. Thus, it is intended that the present application cover the modifications and variations provided they come within the scope of the appended claims and their equivalents.

## Claims

1. A fiber optic connector assembly comprising:
a housing comprising a rear end and a front end with a longitudinal passageway extending from the rear end to the front end, wherein the rear end extends from a wall;
a connector sleeve comprising a first end, a reduced diameter portion at the first end, a rear wall, and a second end extending from the rear wall, wherein:
the first end of the connector sleeve is disposed over the rear end of the housing; and
the reduced diameter portion of the connector sleeve and the wall of the housing define a primary groove; and
a boot having an insertion end, wherein the boot is disposed over a portion of the second end of the connector sleeve such that the insertion end of the boot and the rear wall of the connector sleeve define a secondary groove.

2. The fiber optic connector assembly of claim 1, wherein the connector sleeve is fabricated from a metal.

3. The fiber optic connector assembly of claims 1 or 2, further comprising a ferrule assembly comprising a ferrule holder, a ferrule disposed in the ferrule holder, and a ferrule spring, wherein the ferrule assembly is disposed within the longitudinal passageway at the front end of the housing.

4. The fiber optic connector assembly of any one of claims 1-3, further comprising a cable adapter comprising a front end having a fiber opening, a strength member enclosure, and a rear end comprising two wings, wherein the cable adapter is disposed within the second end of the connector sleeve.

5. The fiber optic connector assembly of claim 4, further comprising an optical cable comprising a jacket, one or more strength members within the jacket, and an optical fiber within the jacket, wherein:
the one or more strength members terminate within the strength member enclosure; and
the optical fiber extends through the fiber opening.

6. The fiber optic connector assembly of claim 4 or 5, wherein:
the housing further comprises a housing adhesive aperture;
the cable adapter further comprises an adapter adhesive aperture;
the housing adhesive aperture is aligned with the adapter adhesive aperture; and
an adhesive is disposed within the housing adhesive aperture, the adapter adhesive aperture, and the strength member enclosure.

7. The fiber optic connector assembly of any one of claims 4-6, wherein:
a first adhesive annulus is between an outer surface of the rear end of the housing and an inner surface of the connector sleeve;
a second adhesive annulus is between an outer surface of the front end of the cable adapter and an inner surface of the rear end of the housing; and
the adhesive is disposed within the first adhesive annulus and the second adhesive annulus.

8. The fiber optic connector assembly of any one of claims 5-7, wherein:
the second end of the connector sleeve comprises an engagement groove;
the fiber optic connector assembly further comprises a heat shrink member disposed over the optical cable and a portion of the second end of the connector sleeve up to the engagement groove;
the boot comprises a barb at an interior surface of the insertion end; and
the barb is positioned within the engagement groove to secure the boot to the connector sleeve.

9. The fiber optic connector assembly of any one of claims 1-8, further comprising a primary sealing member disposed within the primary groove and a secondary sealing member disposed within the secondary groove.

10. The fiber optic connector assembly of claim 9, wherein the primary sealing member is an O-ring and the secondary sealing member is a tapered sealing member.

11. The fiber optic connector assembly of claims 9 or 10, wherein the secondary sealing member comprises a straight portion and a tapered portion extending from an end of the straight portion.

12. A method of assembling a fiber optic connector assembly, the method comprising:
removing a portion of a jacket of an optical cable to expose one or more strength members and an optical fiber;
cutting the one or more strength members;
inserting the optical cable into a cable adapter such that the one or more strength members are disposed within a strength member enclosure of the cable adapter, and the optical fiber extends through an opening of a front end of the cable adapter;
inserting the cable adapter and the optical fiber into a longitudinal passageway of a housing such that the cable adapter is disposed within a rear end of the housing and an end of the optical fiber is positioned within a ferrule assembly disposed within a front end of the housing, wherein:
the housing comprises a housing adhesive aperture at the rear end;
the cable adapter further comprises an adapter adhesive aperture; and
the housing adhesive aperture is aligned with the adapter adhesive aperture;
disposing an adhesive within the housing adhesive aperture, the adapter adhesive aperture, and the strength member enclosure;
positioning a first end of a connector sleeve over the rear end of the housing, wherein:
the connector sleeve comprises a reduced diameter portion at the first end, a rear wall, and a second end extending from the rear wall; and
the reduced diameter portion of the connector sleeve and a wall of the housing define a primary groove; and
applying a curing energy to the connector sleeve to cure the adhesive; and
securing an insertion end of a boot to a portion of the second end of the connector sleeve, wherein the optical cable is disposed through the boot, and the rear wall of the connector sleeve define a secondary groove.

13. The method of claim 12, wherein:
the second end of the connector sleeve comprises an engagement groove;
the boot comprises a barb at an interior surface of the insertion end; and
the boot is disposed over the portion of the second end of the connector sleeve such that the barb is disposed within the engagement groove.

14. The method of claims 12 or 13, wherein:
a first adhesive annulus is between an outer surface of the rear end of the housing and an inner surface of the connector sleeve;
a second adhesive annulus is between an outer surface of the front end of the cable adapter and an inner surface of the rear end of the housing; and
the adhesive is disposed within the first adhesive annulus and the second adhesive annulus.

15. The method of any one of claims 12-14, further comprising positioning a primary sealing member within the primary groove and positioning a secondary sealing member within the secondary groove.
